# EUROPÄISCHE PATENTANMELDUNG

(11) **EP 3 564 165 A1**
(43) Veröffentlichungstag der Anmeldung: **06.11.2019**
(21) Anmeldenummer: 19171378.3
(22) Anmeldetag: 26.04.2019
(51) Int. Cl.: B65G 1/137, B65G 1/04

(54) **KOMMISSIONIEREINRICHTUNG ZUM KOMMISSIONIEREN VON EINEM VORRATSBEHÄLTER IN EINEN AUFTRAGSBEHÄLTER UND ENTSPRECHENDES VERFAHREN**

(30) Priorität: 02.05.2018 DE 102018110502
(71) Anmelder: Dematic GmbH, 63150 Heusenstamm (DE)
(72) Erfinder: Wehner, Matthias, 63075 Offenbach (DE); Hartwig, Reckemeier, 63110 Rodgau (DE); Polanz, Tobias, 56412 Görgeshausen (DE); Jung, Armin, 63165 Mühlheim (DE); Mushack, Sören, 64390 Erzhausen (DE)
(74) Vertreter: Moser Götze & Partner Patentanwälte mbB

(57) **Zusammenfassung**

Kommissioniereinrichtung zum Kommissionieren von einem Vorratsbehälter (V) in einen Auftragsbehälter (A), die eine entlang einer Führungsschiene verfahrbare mobile Plattform (1) mit einem Robotergreifarm (9) umfasst, wobei die mobile Plattform je einen Aufnahmeplatz für den Vorratsbehälter und den Auftragsbehälter aufweist, die beide vom Robotergreifarm erreichbar angeordnet sind und der Robotergreifarm von einer plattformgestützen Bildaufnahme- und Auswertungseinheit sowie einer plattformgestützen Steuerung angesteuert ist, und entsprechendes Verfahren.

## Beschreibung

Die Erfindung betrifft eine Kommissioniereinrichtung zum Kommissionieren aus einem Vorratsbehälter in einen Auftragsbehälter gemäß Anspruch 1 und ein Verfahren zum Kommissionieren gemäß Anspruch 10.

Shuttlesysteme arbeiten üblicherweise nach dem Ware-Zu-Mann (oder "goods to person") Prinzip, umfassen also die Arbeitsschritte Auslagern, Ausschleusen, Fördern, Kommissionieren, Einschleusen und Einlagern. Die eigentliche manuelle Kommissionierung findet außerhalb des (Hoch-)Regallagers an einem separaten Kommissionierplatz statt (vgl. z.B. EP 3 022 134 B1).

Alternativ sind in jüngster Zeit sogenannte Robotic-Picking Konzepte veröffentlicht worden, bei denen Roboter zum Kommissionieren Stückgüter erkennen, greifen und umlagern. Dieses findet an dedizierten Kommissionierplätzen statt, so z.B. das Knapp Pick-it-Easy Robot System (https://www.youtube.com/watch?v=E_MH51IzUsE), Swisslog Automated Item Picking (https://www.youtube.com/watch?v=MJSITiLi7iA) oder auch Dematic RapidPick XT.

Daneben ist es auch bekannt, solche robotergestützen Kommissioniervorgänge mobil auf AVGs oder Shuttles zu realisieren (vgl. Dematic Piece Picking Robot: https://www.youtube.com/watch?v=kVuq-_5195M oder Dematic FlexTruck AGV: https://www.youtube.com/watch?v=yn5ejzbrj_s), wozu diese einen Robotergreifarm aufweisen, was es ihnen ermöglicht, an den dedizierten Kommissionierplätzen oder entlang von Fahrbahnen und -bereichen einen gewissen Bewegungsspielraum auszuschöpfen.

Demgegenüber besteht die Aufgabe der vorliegenden Erfindung darin, ein Kommissioniersystem und Verfahren mit erhöhter Leistung und innerhalb eines kompakten Bauraums bereitzustellen.

Diese Aufgabe wird durch das in Anspruch 1 wiedergegebene System und dem in Anspruch 10 angegebenen Verfahren gelöst. Vorteilhafte Ausgestaltungen ergeben sich aus den Unteransprüchen und der Beschreibung.

Erfindungsgemäß ist erkannt worden, dass wenn die Kommissioniereinrichtung zum Kommissionieren von einem Vorratsbehälter in einen Auftragsbehälter eine entlang einer Führungsschiene verfahrbare mobile Plattform mit einem Robotergreifarm umfasst, wobei die mobile Plattform je einen Aufnahmeplatz für den Vorratsbehälter und den Auftragsbehälter aufweist, die beide vom Robotergreifarm erreichbar angeordnet sind und der Robotergreifarm von einer plattformgestützen Bildaufnahme- und Auswertungseinheit sowie einer plattformgestützen Steuerung angesteuert ist, also das Kommissionieren mit dem Roboter direkt auf der mobilen Plattform stattfindet, auf eine zeitintensive Auslagerung und Verlagerung des Vorratsbehälters verzichtet werden kann, was wiederum den Durchsatz des Systems erhöht. Darüberhinaus entfallen Anforderungen an die Andienung von Quell- und Zielbehältern in einer bestimmten Reihenfolge / Sequenz.

Mit anderen Worten, es wird nach dem Prinzip Roboter-zu-Ware gearbeitet. Die Warenbehälter bzw. Vorratsbehälter werden genau dort zum Kommissionieren verwendet, wo sie gelagert werden. Sie müssen also z.B. nicht im Lager vom Regal zur Kommissionierstation und zurück gefördert werden.

Mit diesem Prinzip kann der komplette Kommissioniervorgang (z.B. innerhalb des Regallagers) autonom durchgeführt und somit die Anzahl der Arbeitsschritte und die dafür benötigte Zeit verringert werden. Darüberhinaus wird der manuelle Aufwand / Personaleinsatz an der Kommissionierung komplett eliminiert.

Die Vorratsbehälter werden also zum Kommissionieren nur kurzzeitig auf die mobile Plattform ausgelagert und dort zum Kommissionieren verwendet. Anschließend werden die Vorratsbehälter direkt wieder eingelagert.

Der Auftragsbehälter wird dagegen bis zur Vollendung des Kommissionierauftrags für die jeweilige mobile Plattform mitgeführt. Erst nach Beendigung des entsprechenden Kommissionierauftrags wird er von der mobilen Plattform abgegeben, die anschließend für den nächsten Kommissionierauftrag frei wird.

Der abgegebene Auftragsbehälter kann über verschiedenste Wege und Mittel "weiterverarbeitet" werden. Er kann z.B. über Lifte das Regallager verlassen, wozu er direkt an diese oder indirekt über Pufferstrecken an diese abgegeben werden kann. Die Lifte können an Stirnseiten des Regals und/oder innerhalb des Regals z.B. in Gassenlängsrichtung mittig innerhalb der Lagerplätze in einer sogenannten drive-through Konfiguration angeordnet sein. Denkbar ist auch die direkte Abgabe an Auslagerförderer oder an andere Regalbediengeräte - zum Beispiel eine andere Gasse oder eine andere Ebene des Lagers.

Auftragsbehälter werden verstanden als Sammelbehälter, in denen Artikel eines Auftrags hineinkommissioniert werden. Dabei kann es sich auch um einen Teilauftrag, also um einen Teil der zur vollständigen Auftragserfüllung nötigen Artikel handeln, so dass der entsprechende Behälter später beim Vorliegen aller Artikel oder in anderen Bereichen (Zonen) fertig kommissioniert oder mit anderen Teil-Auftragsbehältern konsolidiert wird.

Vorratsbehälter werden verstanden als Quellbehälter, aus denen Artikel entnommen und in Auftragsbehälter umgelagert werden. Die Quellbehälter können dabei Artikel einer Art (sortenrein) oder auch gemischte Artikel mehrerer Arten enthalten.

In einer bevorzugten Ausführungsform handelt es sich bei der Kommissioniereinrichtung um ein Kommissionier- und Regallagersystem mit einem Regallager mit Lagerregalen, welche in übereinander liegenden Regalebenen Lagerplätze für Warenbehälter, zumindest einer sich zwischen benachbart zueinander angeordneten Lagerregalen erstreckenden Regalgasse aufweisen und die mobile Plattform ein zumindest entlang der Regalgasse verfahrbares Regalbediengerät zum Ein- und Auslagern der Warenbehälter in oder aus den Lagerplätzen der Lagerregale mittels eines Lastaufnahmemittels ist.

Es versteht sich jedoch, dass auch eine Verwendung in einem Kommissionierbahnhof in der Vorzone etc. möglich ist, so dass die Förderwege für die Vorratsbehälter kurz sind.

Sinnvollerweise sind die Aufnahmeplätze für Warenbehälter nebeneinander und der Robotergreifarm dazwischen angeordnet. Dies erlaubt es, den erreichbaren Bereich des Robotergreifarms optimal auszunutzen.

Vorzugsweise ist der Robotergreifarm ein Mehrachsengreifarm, wie z.B. ein 6-Achsenarm.

Bevorzugt ist es, wenn die Kamera der plattformgestützen Bildaufnahme- und Auswertungseinheit aufgeständert ist, damit diese einen optimalen Blickwinkel und Blickfeld auf den Vorratsbehälter aufweist.

Die Aufständerung kann ebenso wie der Robotergreifarm ausklappbar oder verfahrbar ausgestaltet werden, damit die Ebenenhöhe in einem Regallager mit Einebenenregalbediengeräten in jeder Ebene nicht erhöht werden muss, um ein "Darüberhinwegfahren" zu erlauben.

Die Aufnahmeplätze können gleiche oder unterschiedliche Fördertechnik zum Übernehmen und Abgeben der Warenbehälter aufweisen. Mit anderen Worten, der Aufnahmeplatz für den Auftragsbehälter kann mit einer einfachen Rollen-, Band- oder Gurtförderertechnik ausgestaltet werden, wohingegen es sinnig ist, den Aufnahmeplatz für den Vorratsbehälter mit Teleskopschienen und ein- und ausfahrbaren Fingern auszugestalten, um das Ein- und Auslagern der Behälter im Lagerregal zu erlauben.

Vorzugsweise weist der Robotergreifarm einen wechselbaren Greifkopf auf, damit je nach zu greifendem Artikel ggf. ein geeigneter Greifkopf verwendet werden kann, z.B. Finger-/Klemmgreifer, Vakuumgreifer etc.
Die mobile Plattform kann entsprechend Plätze zum Aufbewahren der Wechselgreifköpfe aufweisen. Somit wird ein selbsttätiges Wechseln direkt auf der mobilen Plattform und in Bezug auf den nächsten Pick-Auftrag möglich.

Die mobile Plattform kann ein Regalbediengerät, ein Einebenenregalbediengerät, insbesondere ein Shuttle, oder auch ein klassisches Regalbediengerät sein, das ein entlang der Gasse verfahrbares Fahrwerk mit einem Mast und einen am Mast vertikal verfahrbaren Hubschlitten als Lastaufnahmemittel aufweist.

Wenn die mobile Plattform ein Einebenenregalbediengerät ist, kann in jeder Ebene (Lagerregals) ein Einebenenregalbediengerät angeordnet sein.
Alternativ kann ein Einebenenregalbediengerät-Lift zum Wechsel der Regalebenen vorgesehen sein.

Erfindungsgemäß wird auch ein Verfahren zum Kommissionieren von einem Vorratsbehälter in einen Auftragsbehälter bereitgestellt, wobei der Vorratsbehälter und der Auftragsbehälter sich auf einer entlang einer Führungsschiene verfahrbaren mobilen Plattform mit einem Robotergreifarm befinden, wobei die mobile Plattform je einen Aufnahmeplatz für den Vorratsbehälter und den Auftragsbehälter aufweist, die beide vom Robotergreifarm erreichbar sind und der Robotergreifarm von einer plattformgestützen Bildaufnahme- und Auswertungseinheit sowie einer plattformgestützen Steuerung angesteuert ist, um aus dem Vorratsbehälter in den Auftragsbehälter zu kommissionieren.

Erfindungsgemäß erfolgt das Kommissionieren direkt nach der Vorratsbehälter-Entnahme in der Regalgasse, wenn es in einem Regallager, in dem in gegenüberliegenden Lagerregalen in mehreren Ebenen Warenbehälter gelagert sind, durchgeführt wird, wobei zwischen den Lagerregalen eine Regalgasse angeordnet ist, und die mobile Plattform ein Regalbediengerät ist, wobei das Regalbediengerät ein Lastaufnahmemittel mit den zwei Aufnahmeplätzen für Vorratsbehälter und Auftragsbehälter aufweist.

Als weitere Besonderheit wird die Auftragsabarbeitung völlig autonom durch die mobile Plattform durchgeführt, d.h. durch eine Übergabe eines Kommissionierauftrags von einer zentralen Auftragssteuerung an die Steuerung des Regalbediengeräts, das daraufhin den Auftrag selbststätig abarbeitet, wozu die Bildaufnahme- und Auswertungseinheit mit einer Objekterkennung arbeitet, um das Objekt des Auftrags in dem entnommenen Vorratsbehälter auf dem Lastaufnahmemittel zu erkennen und den Rotobergreifarm entsprechend zur Aufnahme und Abgabe in den Auftragsbehälter auf dem Lastaufnahmemittel zu steuern.

Mit anderen Worten, die mobile Plattform kommuniziert mit der zentralen Auftragssteuerung nur den (Halb-)Auftrag an sich, (z.B. Artikel, Menge, Lagerort). Anschließend werden alle Schritte zur Abarbeitung von der mobilen Plattform selbsttätig/autark durchgeführt, d.h. z.B. Anfahren des Lagerplatzes, Auslagern des Vorratsbehälters, Bildaufnahme und Artikelerkennung und Ansteuerung des Robotergreifarms etc., Einlagerung des Vorratsbehälters und Anfahren des nächsten Lagerplatzes usw. bis zur Fertigstellung des Auftrags und Abgabe des Auftragsbehälters.

Zusätzlich können die Artikel im Vorratsbehälter mittels eines Barcodelesers verifiziert und ggf. Zusatzdaten erfasst werden (z.B. Chargen-Nummer, MHD etc.).

Auf diese Weise wird vermieden, dass irgendein Quellbehälter, wie bislang, aus dem Regal heraus zu einem Kommissionierplatz oder einem Pickroboter außerhalb des Regals gefahren werden muss. Gleichzeitig ist dies ein Instrument der Qualitätskontrolle.

Weitere Details der Erfindung ergeben sich aus der nachfolgenden Beschreibung von Ausführungsbeispielen anhand der Zeichnung, in der
- Fig. 1: eine schematische perspektivische Ansicht eines Einebenenregalbediengeräts zeigt;
- Fig. 2: eine schematische perspektivische Ansicht eines Regalbediengeräts mit Mast und Hubschlitten zeigt;
- Fig 3: eine schematische Draufsicht auf ein Regallagersystem unter Verwendung eines Einebenenregalbediengeräts nach Figur 1 zum Kommissionieren zeigt.

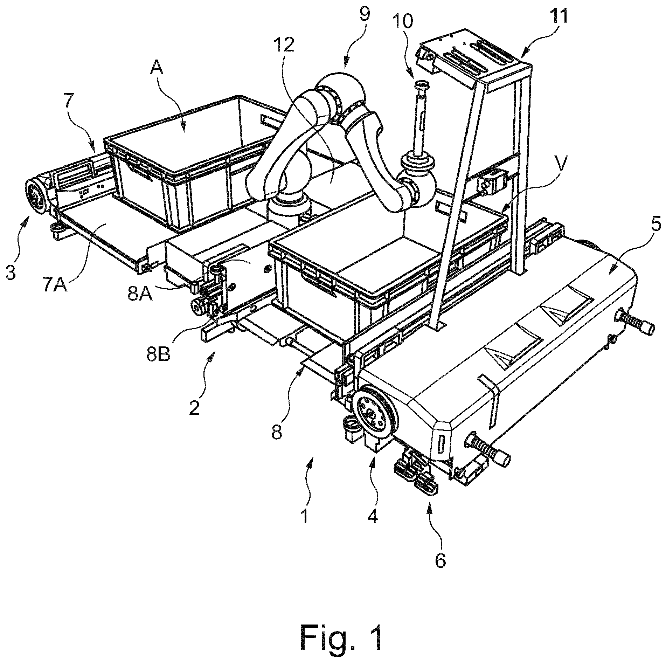

In der Figur 1 ist ein als Ganzes mit 1 bezeichnetes Einebenenregalbediengerät, auch als Shuttle bekannt, dargestellt.

Es weist eine auf Schienen verfahrbare mobile Plattform 2 auf, die in Fahrtrichtung vorne und hinten Achsen mit Laufrollen 3 bzw. angetrieben Rollen 4 aufweist.

Im Bereich der Antriebsrollen 4 ist auch eine Steuereinheit 5 angeordnet, die über Schleifleitungsabnehmer 6 mit Strom (aus der nicht dargestellten Laufschiene in bekannter Weise) versorgt wird und das Shuttle 1 steuert.

Das Shuttle 1 weist zwei voneinander beabstandete Aufnahmeplätze 7, 8 auf. Ein Aufnahmeplatz 7 ist für einen mitzuführenden Auftragsbehälter A und der andere Aufnahmeplatz 8 ist für ein- und auszulagernde Vorratsbehälter V.

Der Aufnahmeplatz 7 ist mit einem Gurtförderer 7A zur Aufnahme und Abgabe des Auftragsbehälters A ausgestaltet. Dahingegen ist der Aufnahmeplatz 8 für den Vorratsbehälter V mit beidseitig angeordneten Teleskopschienen 8A einschließlich ein- und ausfahrbaren Fingern 8B ausgestaltet, so dass die Vorratsbehälter V wie bekannt beidseitig ein- und ausgelagert werden können.

Zwischen diesen Plätzen ist ein 6-Achsen-Robotergreifarm 9 samt Greifkopf 10 angeordnet, so dass dieser zum Kommissionieren von dem jeweils geladenen Vorratsbehälter V in den mitgeführten Auftragsbehälter A Artikel umlagern kann.

Im Bereich der Steuereinheit 5 ist eine aufgeständerte CCD-Optik 11 angeordnet, so dass diese von dem jeweils geladenen Vorratsbehälter V Bilder aufnehmen kann, die in der Steuereinheit 5 zur Objekterkennung ausgewertet werden, um den 6-Achsen-Robotergreifarm 9 samt Greifkopf 10 für die Aufnahme des notwendigen Artikels zu steuern.

Die Steuereinheit 5 kann ebenfalls über die Schleifleitungsabnehmer 6 in bekannter Weise mit einer zentralen Auftragssteuerung kommunizieren, um Informationen zum abzuarbeitenden Kommissionierauftrag an sich, wie Artikel, Menge, Lagerort zu erhalten.

Die eigentliche Auftragsabarbeitung selbst inkl. der Bilderkennung wird allerdings selbsttätig in der Steuereinheit 5 durchgeführt.

Der Greifkopf 10 des Robotergreifarms 9 ist wechselbar, wozu eine Aufbewahrungsstation 12 auf dem Shuttle 1 neben der Basis des Robotergreifarms 9 angeordnet ist, so dass der Robotergreifarm 9 selbständig den Greifkopf 10 wechseln kann, um je nach zu kommissionierendem Artikel einen geeigneten Greifkopf 10 zu verwenden.

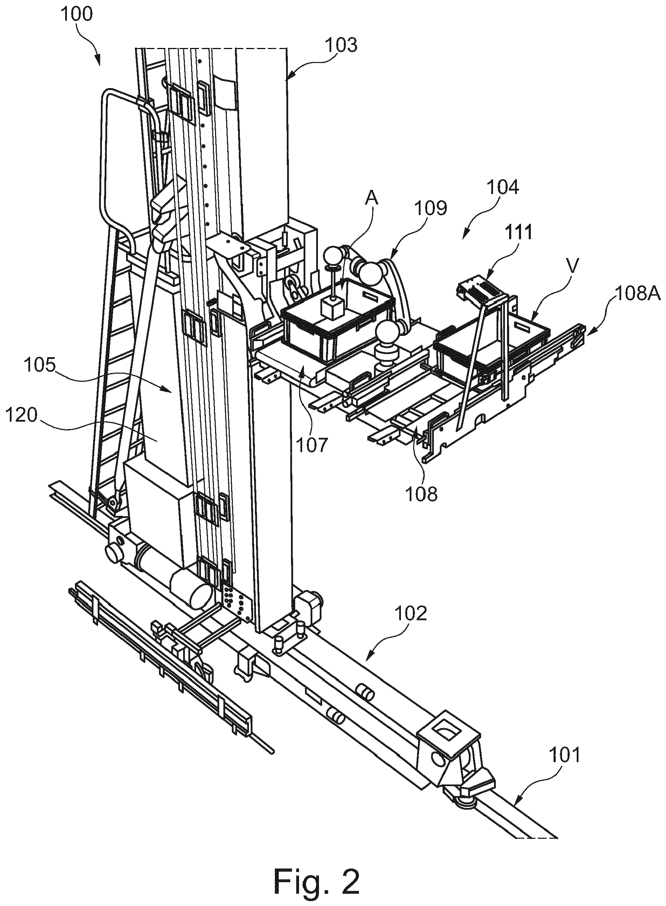

In Figur 2 ist ein klassisches Regalbediengerät 100 gezeigt, dass ein entlang einer Schiene 101 verfahrbares Fahrwerk 102 mit einem Mast 103 und einen am Mast 103 vertikal verfahrbaren Hubschlitten 104 als Lastaufnahmemittel aufweist.
Im Vergleich zum Shuttle der Figur 1 ist das Regalbediengerät 100 ein Mehrebenenregalbediengerät, da es alle Positionen und Ebenen eines Lagerregals anfahren kann.

Ansonsten ist aber der Hubschlitten 104 mit derselben Technik (Aufnahmeplätze, Robotergreifarm, CCD-Optik etc.) ausgestattet, wie das Shuttle der Figur 1. Entsprechend sind sich entsprechende Teile mit um 100 erhöhten Bezugszeichen versehen.

Lediglich die Steuereinheit 105 ist vorliegend nicht am Hubschlitten 104 selbst, sondern in dem zentralen Elektronikgehäuse 120 am Mastfuß angeordnet, da dort ohnehin Elektronik und Steuerungen angebracht sind.

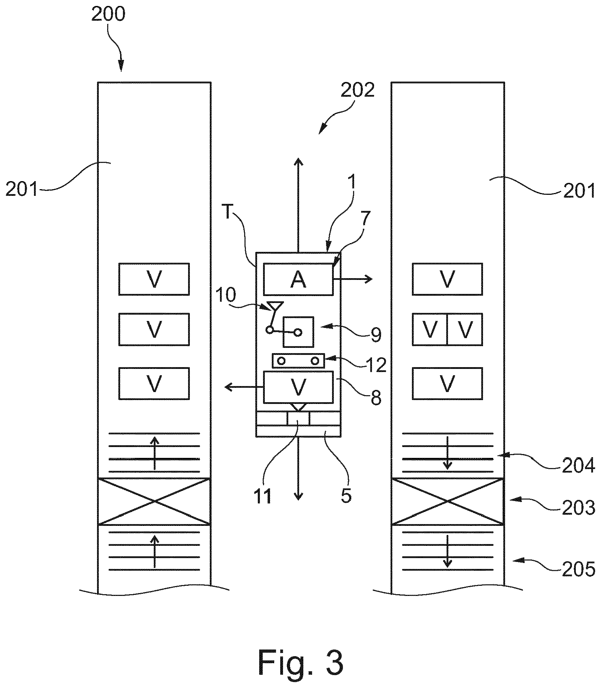

Anhand von Figur 3 soll die Verwendung eines Einebenenregalbediengeräts (bzw. Shuttles) 1 nach Figur 1 zum Kommissionieren in einem Regallagersystem 200 dargestellt werden.

Das Regallagersystem 200 umfasst mehrebenen Lagerregale 201, die voneinander mittels einer Regalgasse 202 getrennt sind und Lagerplätze für Vorratsbehälter V umfassen.

In der Regalgasse 202 fährt in jeder Ebene ein Shuttle 1, wie es oben mit Bezug zu Figur 1 beschrieben wurde.

In den Lagerregalen 201 integriert sind jeweils vertikale Lifte 203, die beidseitig mit Auslager- und Einlagerpuffern 204, 205 versehen sind, um die auszulagernde Behälterabgabe bzw. einzulagernde Behälteraufnahme durch das Shuttle vom Liftbetrieb zu entkoppeln.

Das Shuttle 1 bzw. dessen Steuereinheit 5 empfängt einen Kommissionierauftrag. Um diesen zu erfüllen, nimmt es einen leeren Behälter als Auftragsbehälter A im Aufnahmeplatz 7 auf und fährt daraufhin entlang der Regalgasse 202 zum Lagerplatz eines zunächst benötigten Vorratsbehälters V.

Dort angekommen zieht es den Vorratsbehälter V aus dem Lagerregal 201 mittels der Teleskopschienen 8A und Finger 8B auf den Aufnahmeplatz 8.

Dann nimmt die CCD-Optik 11 ein Bild des Inhalts des Vorratsbehälters V auf, das in dem Auswertungsmodul der Steuereinheit 5 zur Erkennung der Lage der Artikel im Vorratsbehälter V einer Objekterkennung unterworfen wird.

Dadurch ist es nun möglich den Robotergreifarm 9 und dessen Greifkopf 10 entsprechend zur Aufnahme des Artikels aus dem Vorratsbehälter V und dessen Abgabe in den Auftragsbehälter A zu steuern.

Anschließend wird der Vorratsbehälter V sofort wieder mittels der Teleskopschienen 8A und Finger 8B vom Aufnahmeplatz 8 zurück in seinen Lagerplatz im Lagerregal 201 geschoben.

Der Vorgang wird analog für den nächsten Artikel bzw. Vorratsbehälter V wiederholt, bis der Auftrag abgearbeitet ist.

Dann wird der so gefüllte Auftragsbehälter A über den Auslagerpuffer 204 an den Lift 203 zum Auslagern abgegeben.

Danach kann das Shuttle 1 den nächsten Auftrag entgegennehmen bzw. abarbeiten.

## Patentansprüche

1. Kommissioniereinrichtung zum Kommissionieren von einem Vorratsbehälter in einen Auftragsbehälter, die eine entlang einer Führungsschiene verfahrbare mobile Plattform mit einem Robotergreifarm umfasst, wobei die mobile Plattform je einen Aufnahmeplatz für den Vorratsbehälter und den Auftragsbehälter aufweist, die beide vom Robotergreifarm erreichbar angeordnet sind und der Robotergreifarm von einer plattformgestützen Bildaufnahme- und Auswertungseinheit sowie einer plattformgestützen Steuerung angesteuert ist, **dadurch gekennzeichnet, dass** der Robotergreifarm einen wechselbaren Greifkopf aufweist.

2. Kommissioniereinrichtung nach Anspruch 1, **dadurch gekennzeichnet, dass** die Kommissioniereinrichtung ein Kommissionier- und Regallagersystem mit einem Regallager mit Lagerregalen ist, welche in übereinander liegenden Regalebenen Lagerplätze für Warenbehälter, zumindest einer sich zwischen benachbart zueinander angeordneten Lagerregalen erstreckenden Regalgasse aufweisen und die mobile Plattform ein zumindest entlang der Regalgasse verfahrbares Regalbediengerät zum Ein- und Auslagern der Warenbehälter in oder aus den Lagerplätzen der Lagerregale mittels eines Lastaufnahmemittels ist.

3. Kommissioniereinrichtung nach Anspruch 1 oder 2, **dadurch gekennzeichnet, dass** die Aufnahmeplätze für Warenbehälter nebeneinander und der Robotergreifarm dazwischen angeordnet sind.

4. Kommissioniereinrichtung nach einem der vorhergehenden Ansprüche, **dadurch gekennzeichnet, dass** die Aufnahmeplätze gleiche oder unterschiedliche Fördertechnik zum Übernehmen und Abgeben der Warenbehälter aufweisen.

5. Kommissioniereinrichtung nach Anspruch 1, **dadurch gekennzeichnet, dass** das Lastaufnahmemittel Plätze zum Aufbewahren der Wechselgreifköpfe aufweist.

6. Kommissioniereinrichtung nach einem der vorhergehenden Ansprüche 2 bis 5, **dadurch gekennzeichnet, dass** das Regalbediengerät ein Einebenenregalbediengerät, insbesondere ein Shuttle ist.

7. Kommissioniereinrichtung nach Anspruch 6, **dadurch gekennzeichnet, dass** in jeder Ebene ein Einebenenregalbediengerät angeordnet ist.

8. Kommissioniereinrichtung nach Anspruch 6 oder 7 , **dadurch gekennzeichnet, dass** ein Einebenenregalbediengerät-Lift zum Wechsel der Regalebenen vorgesehen ist.

9. Kommissioniereinrichtung nach einem der vorhergehenden Ansprüche 2 bis 5, **dadurch gekennzeichnet, dass** das Regalbediengerät ein entlang der Gasse verfahrbares Fahrwerk mit einem Mast und einen am Mast vertikal verfahrbaren Hubschlitten als Lastaufnahmemittel aufweist.

10. Verfahren zum Kommissionieren von einem Vorratsbehälter in einen Auftragsbehälter, die sich auf einer entlang einer Führungsschiene verfahrbaren mobilen Plattform mit einem Robotergreifarm befinden, wobei die mobile Plattform je einen Aufnahmeplatz für den Vorratsbehälter und den Auftragsbehälter aufweist, die beide vom Robotergreifarm erreichbar sind und der Robotergreifarm von einer plattformgestützen Bildaufnahme- und Auswertungseinheit sowie einer plattformgestützen Steuerung angesteuert ist, um aus dem Vorratsbehälter in den Auftragsbehälter zu kommissionieren.

11. Verfahren nach Anspruch 10, **dadurch gekennzeichnet, dass** es in einem Regallager, in dem in gegenüberliegenden Lagerregalen in mehreren Ebenen Warenbehälter gelagert sind, durchgeführt wird, wobei zwischen den Lagerregalen eine Regalgasse angeordnet ist, und die mobile Plattform ein Regalbediengerät ist, wobei das Regalbediengerät ein Lastaufnahmemittel mit den zwei Aufnahmeplätzen für Vorratsbehälter und Auftragsbehälter aufweist, wobei das Kommissionieren direkt nach der Vorratsbehälter-Entnahme in der Regalgasse erfolgt.

12. Verfahren nach Anspruch 10 oder 11, **gekennzeichnet durch** eine Übergabe eines Kommissionierauftrags von einer zentralen Auftragssteuerung an die Steuerung des Regalbediengeräts, das daraufhin den Auftrag selbststätig abarbeitet, wozu die Bildaufnahme- und Auswertungseinheit mit einer Objekterkennung arbeitet, um das Objekt des Auftrags in dem entnommenen Vorratsbehälter auf dem Lastaufnahmemittel zu erkennen und den Rotobergreifarm entsprechend zur Aufnahme und Abgabe in den Auftragsbehälter auf dem Lastaufnahmemittel zu steuern.

13. Verfahren nach einem der vorhergehenden Ansprüche 10 bis 12, **dadurch gekennzeichnet, dass** die Steuerung aufgrund des auftragsgemäß zu kommissionierenden Objekts einen Greifkopfwechsel direkt auf dem Lastaufnahmemittel veranlasst.

14. Verfahren nach einem der vorhergehenden Ansprüche 10 bis 13, **dadurch gekennzeichnet, dass** der Vorratsbehälter sofort nach dem Kommissioniervorgang wiedereingelagert wird.
